# EUROPEAN PATENT SPECIFICATION

(11) **EP 2 951 109 B1**
(45) Date of publication and mention of the grant of the patent: **30.11.2016**
(21) Application number: 14708652.4
(22) Date of filing: 29.01.2014
(51) Int. Cl.: B65G 1/06

(54) **SATELLITE VEHICLE FOR AUTOMATED WAREHOUSE**
SATELLITENFAHRZEUG FÜR EIN AUTOMATISIERTES WARENLAGER
VÉHICULE SATELLITE POUR ENTREPÔT AUTOMATISÉ

(30) Priority: 29.01.2013 IT VR20130023
(43) Date of publication of application: 09.12.2015
(73) Proprietor: Elettric 80 S.p.A., 42030 Viano, Reggio Emilia (IT)
(72) Inventor: GUIDI, Roberto, I-42030 Viano (Reggio Emilia) (IT); MANZINI, Franco, I-42030 Viano (Reggio Emilia) (IT)
(74) Representative: Feltrinelli, Secondo Andrea
(86) International application number: PCT/IB2014/058642
(87) International publication number: WO 2014/118716

(56) References cited:
- AT-U1- 7 749
- DE-U1- 20 307 005
- JP-U- S5 330 676

## Description

### TECHNICAL FIELD OF THE INVENTION

The present invention concerns the field of automated warehouses, i.e. warehouses comprising a network type structure that forms a plurality of cells that are arranged in many rows and on many levels, such cells facing aisles in which trolleys move for transporting and storing goods in the form of a pallet or containers in the cells themselves.

More in particular the present invention concerns the trolley that moves in such aisles that are adjacent to the cells and that is often called a satellite vehicle or even simply satellite.

### STATE OF THE ART

Examples of such warehouses and of the relative satellites are described in US patents US-3 800 963 and US-5 967 728.

The satellites illustrated in these documents comprise a plurality of wheels designed to roll on special tracks foreseen in the warehouse.

Since, for a number of reasons, there can be discontinuities, or actual interruptions, between the end of one track and the start of the following track, or in the passages for entering a shelving unit, the satellites have more wheels than the four that would be strictly necessary, and moreover all the wheels, in this case eight wheels, four on each side, are driving wheels.

In such a way, when the wheels of an axle of the satellite are at the aforementioned interruptions, and thus they cannot support the satellite and cannot move it, the wheels of the immediately adjacent axle are still on the tracks, thereby making it possible to keep the satellite supported. Moreover, since also the wheels of the immediately adjacent axle are driving wheels, it is ensured that there is continuity of movement of the satellite.

However, the passage above the interruptions in the tracks in any case leads to a vertical movement of the satellite due to the missing support for a whole axle of wheels, thereby causing also a certain instability of the load transported by the satellite, and also an irregularity in the forward movement of the satellite due to the temporary absence of a driving axle.

Patent documents AT 007 749 U1 (disclosing the features according to the preamble of claim 1) , DE20307005U1 and JPS5330676U teach respective vehicles according to the state of the art.

### PURPOSES OF THE INVENTION

The technical task of the present invention is therefore that of improving the state of the art, by proposing a satellite vehicle for automated storage systems that makes it possible to eliminate the drawbacks mentioned above.

In such a technical task, one object of the present invention is to devise a satellite vehicle for automated warehouse that makes it possible to eliminate the problems due to the passage of the vehicle on discontinuities or interruptions to be found along the tracks of the warehouse.

A further object of the present invention is that of making a satellite vehicle for automated warehouse that makes it possible to eliminate the aforementioned problems with a simple and cost-effective construction solution.

Such a technical task and such an object are achieved by a satellite vehicle for automated warehouse according to the attached claim 1.

The vehicle, which is suitable for moving within an automatic warehouse of the type provided with tracks for the displacement of the vehicle, comprises a frame, a support surface for supporting a load provided above said frame, first and second wheels, which are supported by the frame respectively along a first and a second side and that are suitable for rolling on the tracks of the automatic warehouse, and actuating means for actuating the first and second wheels for advancing along the aforementioned tracks.

According to one aspect of the present invention, the first and second wheels are arranged according to at least two pairs in which the first and the second wheel of at least one of the aforementioned pairs respectively have a first and a second axle that do not coincide with one another.

The dependent claims refer to preferred and advantageous embodiments of the invention.

### BRIEF DESCRIPTION OF THE DRAWINGS.

The features of the invention shall become clearer to a man skilled in the art from the following description and from the attached drawing tables, given as a nonlimiting example, in which:
figure 1 is an axonometric view of the satellite vehicle according to the present invention;
figure 2 is an axonometric view of the satellite vehicle with some external parts that have been removed;
figure 3 is a plan view of the satellite vehicle with some external parts that have been removed;
figure 4 is a section view of the satellite vehicle made according to the plane IV-IV of figure 3;
figure 5 is a section view of the satellite vehicle made according to the plane V-V of figure 3, with the lifting means in the lower position;
figure 6 is a section view of the satellite vehicle made according to the plane V-V of figure 3, with the lifting means in the upper position;
figure 7 is an axonometric view of the detail of one end of the vehicle, with some external parts that have been removed;
figure 8 is a plan view of a detail of one end of the vehicle, with some external parts that have been removed;
figure 9 is a schematic view from below of another embodiment of the vehicle according to the invention;
figure 10 is a schematic view from below of yet another embodiment of the vehicle according to the invention;
figures 11 and 12 are schematic plan views of respective embodiments of satellite vehicles according to the present invention.

### EMBODIMENTS OF THE INVENTION

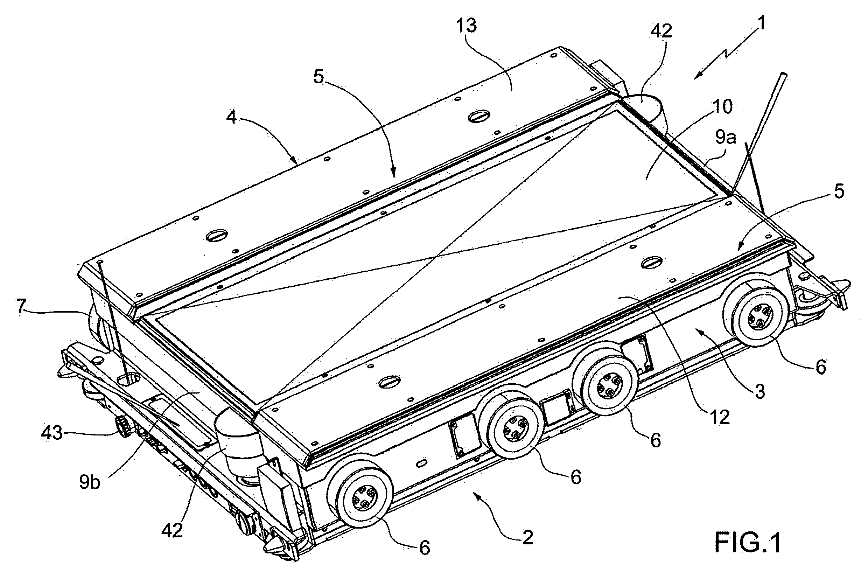

With reference to the attached figure 1, reference numeral 1 wholly indicates a satellite vehicle for automated warehouse according to the present invention. The vehicle 1 is suitable for being used in warehouses comprising a network type structure that forms a plurality of cells that are arranged on a plurality of rows and on a plurality of levels, and facing aisles.

In particular, the vehicle 1 according to the present invention is suitable for moving along such aisles, for transporting and storing in the cells themselves goods in the form of a pallet or containers.

In any case, the vehicle 1 according to the present invention can also be used in warehouses of a different kind, as long as they are provided with tracks that are suitable for the movement of the vehicle itself.

The vehicle 1 comprises a frame 2.

The frame 2 comprises a first side 3 and a second side 4, which are opposite to one another.

Moreover, the vehicle 1 comprises a support surface 5 for supporting a load, which is provided on top of the frame 2.

The load is not represented in the figures, and could for example comprise a normal pallet used for storing goods in these types of warehouses.

The vehicle 1 is provided with first wheels 6 and with second wheels 7, which are suitable for rolling on the tracks of the automatic warehouse.

The first wheels 6 and the second wheels 7 are supported by the frame 2 respectively along the first side 3 and the second side 4.

Moreover, the vehicle 1 comprises actuating means 8 for actuating the first wheels 6 and the second wheels 7 so as to move along the tracks of the warehouse.

According to one aspect of the present invention, the first wheels 6 and the second wheels 7 of the vehicle 1 are arranged according to at least two pairs, in which the first wheel 6 and the second wheel 7 of at least one of such pairs have a first rotation axle X1 and a second rotation axle X2, respectively, which do not coincide with one another.

Each pair of wheels comprises a first 6 and a second 7 wheel and is longitudinally offset with respect to the other pairs of wheels, i. e. both the wheels of each pair lie within or at a transversal area or band of the vehicle that is longitudinally offset with respect to the other pairs, this meaning that each pair of wheels is at a predetermined distance from the ends 9a, 9b of the vehicle which is different with respect to the other pairs.

Moreover, with reference to the wheels of the pair(s) of wheels with rotation axles X1 and X2 which do not coincide with one another, the rotation axle X1 of the respective first wheel and of the respective second wheel is offset or not aligned with respect to the rotation axle of all the other wheels of the vehicle or of the wheels of all the other pairs of wheels of the vehicle.

Preferably, all the pairs of wheels of the vehicle have a first and a second wheel with rotation axles X1 and X2 that do not coincide with one another and each one having its rotation axle offset or not aligned with respect to the rotation axle of all the other wheels of the vehicle.

As shall become clearer in the following, this solution makes it possible to always keep at least one between the first wheels 6 and the second wheels 7 resting on the tracks of the warehouse, even when the vehicle 1 is passing at interruptions or discontinuities occurring along the tracks themselves.

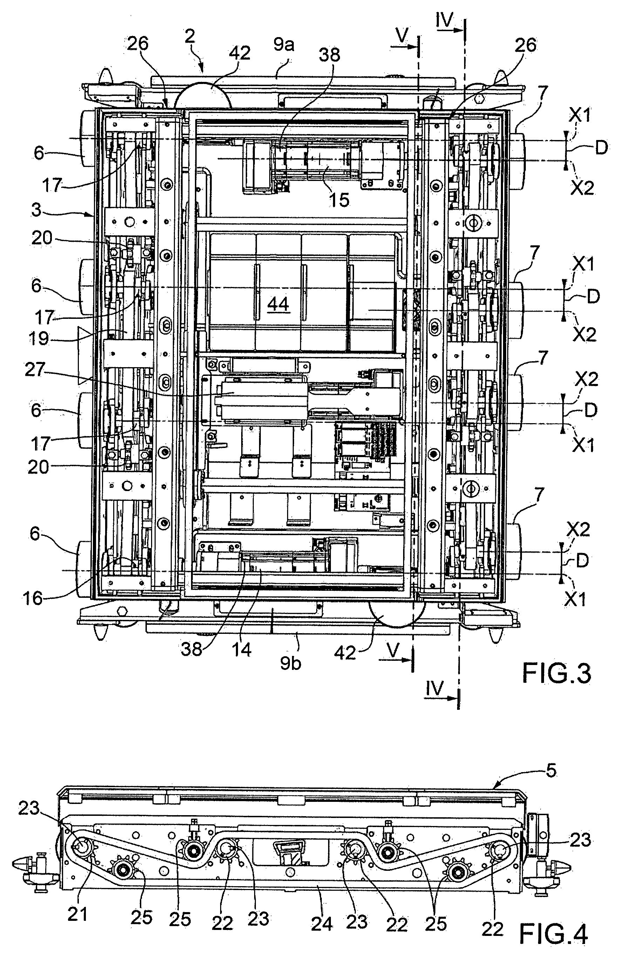

More in detail, as shown in figure 3, the first axle X1 and the second axle X2 are arranged parallel to one another on a plane that is parallel to the rolling plane of the first wheels 6 and of the second wheels 7. Between the first axle X1 and the second axle X2 it is foreseen for there to be a set distance D. Preferably, the distance D is greater than 0 and lower than the diameter of the wheels 6, 7. The aforementioned set distance D can be for example the same for all the pairs of wheels 6, 7 foreseen in the vehicle 1.

However, according to some embodiments, and in relation to specific usage requirements, each pair of wheels 6, 7 can have a set distance D different from the other pairs of wheels.

The frame 2 advantageously comprises the already mentioned first side 3 and second side 4, and two opposed ends 9a, 9b each projecting from one side 3 to the other 4.

The frame 2 of the vehicle 1 can be made up of a substantially rectangular frame structure, which comprises the already mentioned first side 3 and second side 4, and the two opposed ends 9a, 9b at the remaining two sides of the frame structure.

The shape of the frame 2 of the vehicle is in any case per se generally known in the field and shall not be described any further.

The frame 2 is closed by an upper cover 10 and by a lower support plate 11; in particular, the upper cover 10 can be opened so as to allow the inner components of the vehicle 1 to be reached.

As illustrated in figure 1, the support surface 5 for the loads that the vehicle 1 has to transport comprises two strips 12, 13, that are arranged laterally with respect to the upper cover 10, i.e. close to the sides 3,4.

Of course the shape, the size and the position of the support surface 5 could be any, and are not in any case part of the subject-matter of the present invention. The actuating means 8 of the first wheels 6 and of the second wheels 7 comprise, more in detail, a first motor 14, which is supported by the frame 2 of the vehicle 1, and is coupled with at least one of the first wheels 6. The actuating means 8 also comprise a second motor 15, which is supported by the frame 2 of the vehicle 1, and is coupled with at least one of the second wheels 7. More in detail, the first motor 14 and the second motor 15 are mounted on the lower plate 11.

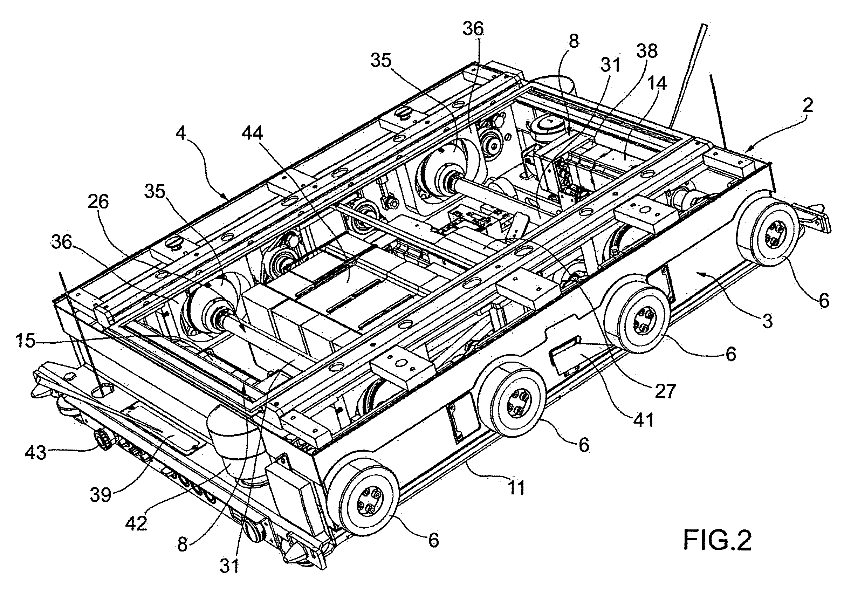

According to the embodiment of the vehicle 1 shown in figures 1-8 there are totally eight wheels 6, 7, i. e. four first wheels 6 and four second wheels 7.

The wheels 6, 7 are arranged in four pairs, wherein each pair thus comprises a first wheel 6 and a second wheel 7 which face with one another, with the respective first and second axles X1, X2 that are suitably spaced apart from one another in the manner that has already been described.

The first motor 14 is mechanically coupled with all the first wheels 6 of the vehicle 1.

In other words, all the first wheels 6 of the vehicle 1 are drive wheels.

Moreover, in the same way, the second motor 15 is mechanically coupled with all the second wheels 7 of the vehicle 1.

In other words, all the second wheels 7 too of the vehicle 1 are drive wheels.

Moreover, the arrangement of the first and second wheels 6, 7 is such that they are perfectly symmetrical with respect to an ideal plane of symmetry that is transversal with respect to the vehicle 1. For such a purpose, more in particular, one or more (two according to the embodiment in the figures) first wheels are provided, i. e. on a first side of the vehicle, wheels that are advanced or proximal to the first end 9a of the vehicle relatively to the respective second wheels on the other side of the vehicle, and one or more (two according to the embodiment in the figures) first wheels that are further back or proximal to the second end 9b of the vehicle relatively to the respective second wheels on the other side of the vehicle. With particular reference to the embodiment illustrated in figures 1 to 8, two first wheels 6 (in figure 3 the first and second first wheel starting from the top or from the end 9a) that are adjacent and subsequent to one another and that are proximal to a first end 9a are further forward by the distance D or proximal to such an end relatively to the respective second wheels of the same pair, whereas the other two first wheels (in figure 3 the third and fourth first wheel from above or from the end 9a) are further back by the distance D or near to the end 9b relatively to the respective second wheels of the same pair.

As illustrated in figure 3, the first motor 14 and the second motor 15 are mounted on the lower plate 11 at the ends 9a, 9b of the frame 2: in such a way a perfectly balanced solution is obtained in terms of weight distribution, and that is optimised in terms of the available spaces.

The actuating means 8 further comprise a first driving crown 16, which is directly coupled to the first motor 14 and to one of the first wheels 6: in particular, the first motor 14 is directly coupled with one of the first wheels 6 placed at one end 9a, 9b of the vehicle 1.

The actuating means 8 further comprise first driven pinions 17, which are respectively coupled with the remaining first wheels 6 through respective first shafts 18 that are rotatably supported by means of bearings in the first side 3 of the frame 2.

Moreover, the actuating means 8 comprise a first drive chain 19, which is wound on the first driving crown 16 and on the first driven pinions 17, as illustrated in figure 4.

It is moreover foreseen for there to be first idler pinions 20 for ensuring the correct winding of the first chain 19.

In a completely symmetrical manner with respect to what is foreseen for the first wheels 6, the actuating means 8 further comprise a second driving crown 21, which is directly coupled with the second motor 15 and with one of the second wheels 7: in particular, the second motor 15 is coupled directly with the second wheel 7 arranged at the end 9b of the vehicle 1 opposed to that where the first motor 14 is mounted.

Therefore, the first wheel 6 and the second wheel 7 that are coupled directly with the first motor 14 and with the second motor 15 are located at angles that are diagonally opposite with respect to the frame 2.

The actuating means 8 further comprise second driven pinions 22, which are respectively coupled with the remaining second wheels 7 through respective second shafts 23 that are rotatably supported with bearings in the second side 4 of the frame 2.

The actuating means 8 moreover comprise a second drive chain 24, which is wound on the second driving crown 21 and on the second driven pinions 22.

Moreover, second idler pinions 25 are provided too designed to ensure the correct winding of the second chain 24.

The actuating means 8 of the wheels 6, 7, in particular concerning the mechanical connection between the wheels 6, 7 themselves, can also be of another equivalent type, without any limitation to the object of the present invention.

For example, instead of crowns 16, 21, pinions 17, 22 and chains 19, 24 pulleys and belts can be used, for example of the poly-V type or other types.

The support surface 5 for the loads to be transported by the vehicle 1 is associated with lifting means 26, in order to be brought from a lower inactive position to an upper transportation position of a load, according to operation modes known for these type of vehicles.

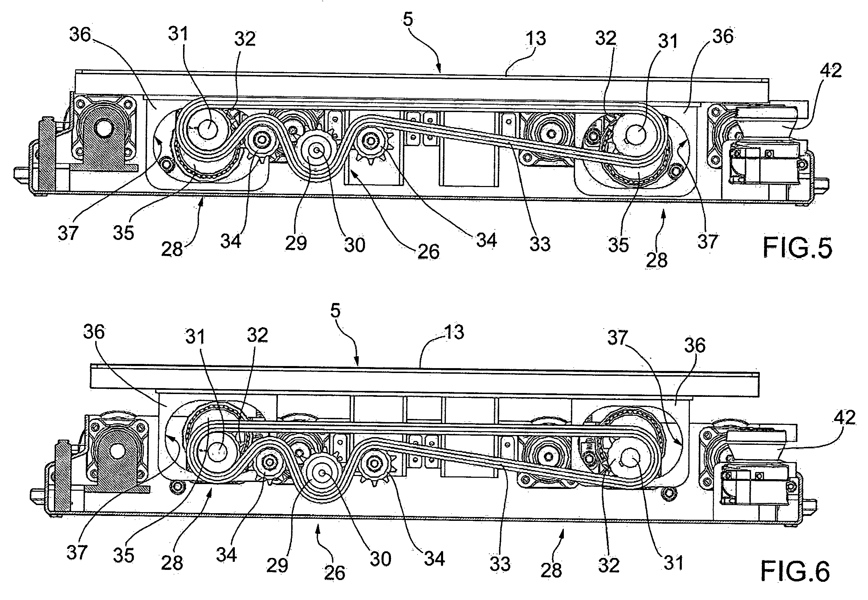

Such lower and upper positions are illustrated in figures 5 and 6, respectively.

The lifting means 26 comprise, more in detail, a third motor 27.

The third motor 27 is supported by the frame 2 and, in particular, it is mounted on the lower plate 11.

The third motor 27 is coupled with a cam mechanism that is wholly indicated with reference numeral 28, which is in turn associated with the support surface 5.

The lifting means 26 of the support surface 5 comprise, more in detail, a third driving crown 29 which is coupled with the outlet shaft 30 of the third motor 27. The third driving crown 29 transmits the movement generated by the third motor 27 to third shafts 31, which are rotatably supported in the frame 2 with axles orthogonal to the movement direction of the vehicle 1. In particular, two third driven pinions 32 are keyed on the third shafts 31.

The movement transmission between the third driving crown 29 and the third driven pinions 32 is obtained through a third chain 33.

Moreover, third idler pinions 34 are provided for the correct winding of the third chain 33.

At each end of the third shafts 31 eccentric ball bearings 35 are fixed, which act as elements for moving the cam mechanism 28 for lifting the support surface 5. Each of the strips 12, 13 forming the support surface 5 comprises two respective lower appendages 36, which act as yielding elements of the cam mechanism 28, each provided with a respective slot 37 inside which a respective eccentric bearing 35 of each of the third shafts 31 engages.

As clearly illustrated in figures 5 and 6, the rotation of the third motor 27 transmitted to the third shafts 31 determines, owing to the eccentric rotation of the bearings 35, the translation of the strips 12, 13 of the support surface 5 from a lower inactive position - figure 5 - to an upper transportation position of a load, illustrated in figure 6, and vice versa.

It is worth underlining that the lifting means 26 for lifting the support surface 5 - in particular of the strips 12, 13 - could also be of another equivalent type.

The first motor 14 and the second motor 15 comprise respective encoders 38, which are keyed on respective axles, which are suitable for detecting the stopping of the vehicle 1 when a load is present on the tracks, or other obstacles, as shall become clearer in the rest of the description of the operation of the vehicle 1. According to some embodiments, only one among the first motor 14 and the second motor 15 could be provided with an encoder 38, in relation to specific usage requirements.

According to another aspect of the present invention, the vehicle 1 comprises first sensor means 39 for detecting the presence of a load from a set distance, as shall become clearer in the following.

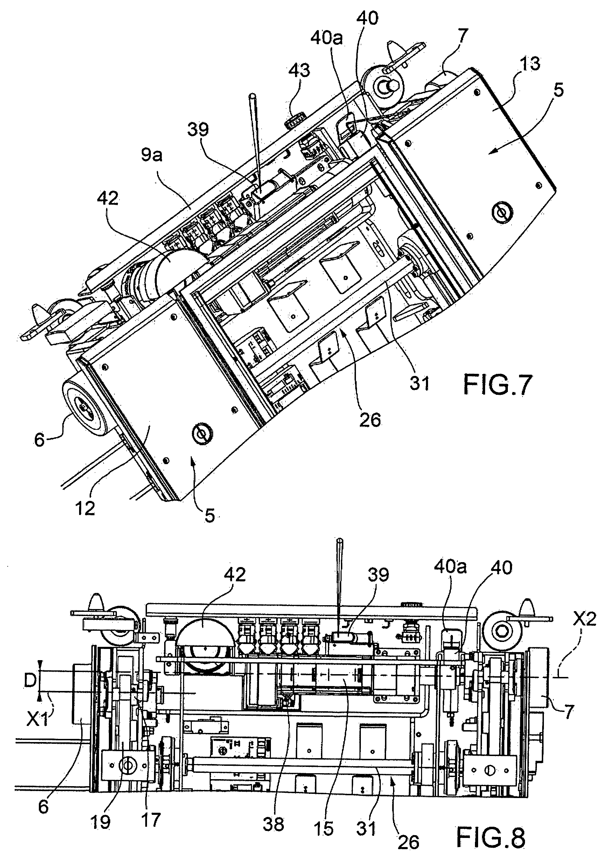

The first sensor means 39 are located at both of the two ends 9a, 9b of the frame 2, as illustrated in figures 7, 8.

Such first sensor means 39 comprise, for each of the ends 9a, 9b of the frame 2, a photocell suitable for emitting a respective beam in the forward movement direction of the vehicle 1.

In particular, the beam emitted by the photocell 39 is inclined with respect to the vertical by a certain angle, for reasons which shall become clearer in the following.

According to yet another aspect of the present invention, the vehicle 1 comprises second sensor means 40 for detecting the end of a load positioned along the tracks of the warehouse.

The aforementioned second sensor means 40 comprise, for each of the ends 9a, 9b of the frame 2, a sonar suitable for emitting upwards a respective signal, in a substantially vertical direction, obtaining the effects that shall become clearer in the following, as illustrated in figures 7, 8.

The sonar 40 is associated with a reflecting surface 40a which provided for directing the beam in the vertical direction.

According to a further aspect of the present invention, the vehicle 1 comprises at least one bar code reading means 41, which is foreseen on at least one between the first side 3 and the second side 4 of the frame 2 of the vehicle 1, or preferably on both the sides 3, 4, which are suitable for reading the bar codes foreseen along the tracks, and which identify a certain track inside the warehouse.

In particular, the bar code reader 41 makes it possible to rephase the vehicle 1 each time it passes a position where the bar code itself is located.

The vehicle 1 according to the present invention further comprises a control unit, to which the motors 14, 15, 27, the sensor means 39, 40, the bar code reading means 41, and any other possible device installed on the vehicle 1 are slaved.

The control unit can be for example made up of an electronic control station, the various components being operatively connected thereto.

Moreover, the vehicle 1 can comprise a further emergency stop sensor 42, which is positioned at at least one of the ends 9a, 9b of the frame 2 of the vehicle 1.

Moreover, the vehicle can be provided with a manual stop button 43.

The vehicle 1 further comprises a battery 44 for supplying power to the different components, which is fixed on the lower plate 11.

The battery 44 can be, for example, of the rechargeable type, or even of another kind known in the field.

The operation of the vehicle 1 according to the present invention is as follows.

When the vehicle 1 is empty, i.e. when there is no load to be transported on its support surface 5, the vehicle 1 can move freely along tracks of the warehouse, in particular along a path made below the loads stored in the cells of the warehouse itself.

In this situation, the support surface 5 of the vehicle 1 is obviously in the lower inactive position.

In such a way the vehicle 1, by running along the tracks, can reach the predetermined position, for example to take a load.

Once the aforementioned predetermined position has been reached, the vehicle is positioned below the load to be taken, and then provides for translating the support surface 5 - i.e. the two strips 12, 13 - in the upper lifting position to lift the load, according to modes that are per se known for this type of vehicles.

This step of positioning the vehicle 1 is particularly delicate, since it must be carried out very precisely so as not to lift the load in an unbalanced or in any case incorrect manner.

Such precision in positioning the vehicle 1 below the load can be obtained through the detections carried out by the second sensor means 40, which as mentioned are suitable for detecting the ends of the load itself.

The second sensor means 40 comprises, as mentioned, sonars emitting respective signals upwards, in a substantially vertical direction.

Therefore, for example, when on the support surface 5 of the vehicle 1 there is no load, the signals upwards emitted by the sonar 40 are not reflected: the control unit, therefore, controls the motors 14, 15 to make the vehicle 1 advance along the tracks, so as to find the correct position.

When, on the other hand, the signal emitted by the sonar 40 which is in a position that is at the front with respect to the forward movement direction of the vehicle 1 is reflected, this means that the vehicle 1 itself has reached, with its front portion, the area beneath the load.

Then, the vehicle 1 is controlled to advance further, possibly for a certain predetermined and known distance based upon the size of the load, up to a stopping position that is determined according to the count carried out by the encoders 38.

The other sonar 40, i. e. that positioned at the opposed end 9a or 9b, can be used to carry out a further control of the correct position with respect to the load.

This last condition means that the vehicle 1 is correctly positioned below the load, i.e. substantially centred with respect to it, and thus it can be completely stopped: the lifting means 26 too of the support surface 5 can thus be actuated so as to lift and take the load.

Once the load has been taken, the vehicle 1 can proceed advancing along the tracks of the warehouse to transport the load itself to another destination, optionally also reaching a shuttle that moves along other transportation paths that are foreseen in the warehouse, in a manner that is known per se and in any case not object of the present invention.

Upon reaching the destination at which the load is to be deposited, the movement control of the vehicle 1 must necessarily take into account the presence of the loads already deposited along the same track, so as to prevent impacts or incorrect positioning.

Therefore, when the vehicle 1, with the relative transported load, moves close to another load that has already been deposited along the track, the first photocell sensor means 39 detect the presence of the load itself when they are still at certain distance, in particular owing to the angle of inclination of the beam emitted by the photocell, which beam can obviously be adjusted in relation to the specific application requirements.

Following the load detection at a certain distance carried out by the first sensor means 39, the control unit gives instructions to the motors 14, 15 to progressively slow down the forward movement of the vehicle 1.

In particular, in this slowing down step, one of the two motors 14, 15 is stopped without actuating the brake, and the vehicle 1 advances at low speed, due to the other motor 14, 15 only.

For example, the first motor 14 could be stopped, and the movement forward could be carried out through the second motor 15 only.

In this situation, the first wheels 6 controlled by the first motor 14 thus become idle.

Once the predetermined destination has been reached - at which the transported load arrives close to the other already present load - the second motor 15 could unintentionally continue to actuate the second wheels 7, which could thus slip on the tracks, optionally causing operating difficulties.

The actual stopping of the vehicle 1 is then advantageously detected by the encoder 38 associated with the first motor 14, which indeed detects the stopping of the first idle wheels 6.

Therefore, this, in turn, determines a stopping signal for the second motor 15 too.

At this stage the support surface 5 can be lowered, and the vehicle 1 can be actuated so as to reach another working destination.

Thanks to the particular arrangement of the first and second axles X1, X2 of the first and second wheels 6, 7, the vehicle 1, when moving continues to be stably rested on the tracks even if interruptions or discontinuities along the tracks themselves occur. This, in a vehicle according to the present invention is obtained due to the fact that the wheels of one or more pairs of wheels have rotation axles X1 and X2 of the respective wheels that do not coincide with one another, and, therefore if a first wheel of a pair is at an interruption or discontinuity, the other one or second wheel of the pair, which is offset with respect to the first one, stably rests on a not interrupted section of a respective track.

In particular, the predetermined distances D between the first and second axles X1, X2 can be suitably sized in relation to the types of discontinuity to be found on the tracks, thus obtaining a regular and controlled movement of the vehicle 1.

According to the embodiment shown in figures 1-8, as above mentioned, the arrangement of the first and second wheels 6, 7 is such that they are perfectly symmetrical with respect to an ideal plane of symmetry that is transverse with respect to the vehicle 1: this ensures the perfect symmetry in the behaviour of the vehicle when advancing in both directions.

Thus, it has been seen that the invention achieves the proposed objects.

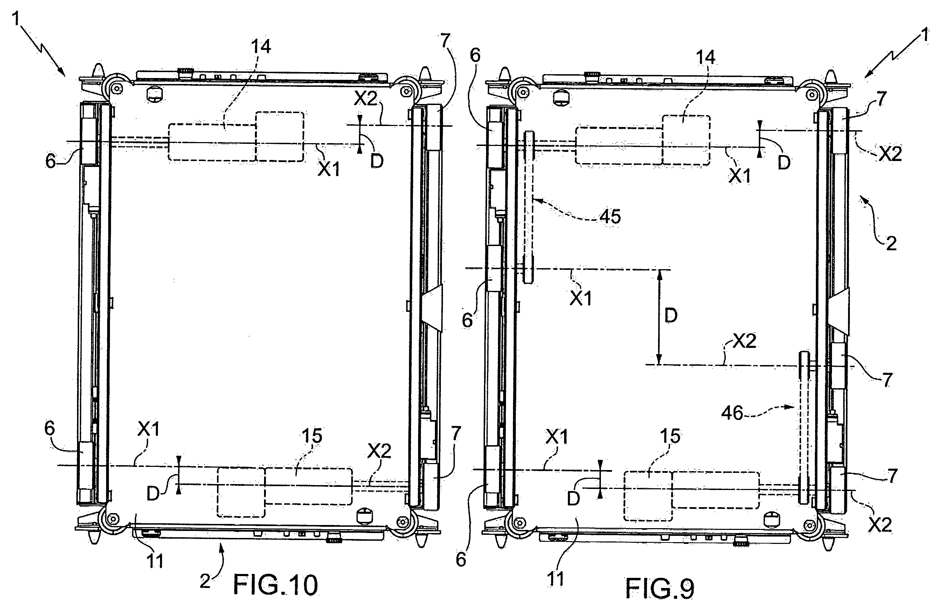

Another embodiment of the vehicle according to the present invention is schematically illustrated in figure 9.

The vehicle according to the present embodiment differs from that of the previous embodiment mainly for the number of pairs of wheels 6, 7 that are present and for the manner in which they are actuated.

All the other elements and components of the vehicle 1 are identical to those described according to the previous embodiment, and shall not be described again. More in particular, according to the present embodiment there are totally six wheels 6, 7 that are arranged in three pairs, i.e. three first wheels 6 that are arranged along the first side 3 of the vehicle 1 and three second wheels 7 that are arranged along the second side 4.

According to this embodiment, the first motor 14 is coupled with two first adjacent wheels 6.

The first motor 14 can be directly coupled with one of the first wheels 6.

It is also foreseen for there to be transmission means 45 for the other of the first wheels 6, which can be of the crown - pinion - chain type as that described in the previous embodiment.

The second motor 15 is coupled with two second wheels 7, which are adjacent and do not correspond to the first wheels 6 to which the first motor 14 is coupled. In such a way, also in this case the motors 14, 15 are positioned at the two ends 9a, 9b of the vehicle 1, thereby balancing the weights.

The second motor 15 can be directly coupled with one of the second wheels 7.

It is furthermore foreseen for there to be second transmission means 46 for the other of the second wheels 7, which can be of the crown - pinion - chain type like that described in the previous embodiment. The predetermined distances D between the first and second axles X1, X2 of the three pairs of first and second wheels 6, 7 can be the same, but they can also be different from one another.

This embodiment of the vehicle 1 has a simplified structure and is more cost-effective with respect to the previous one, thanks to the lower number of wheels 6, 7 and to the transmission means 45, 46 comprising a lower number of components.

The stability of the vehicle 1 when crossing discontinuities or interruptions along the tracks is in any case fully ensured, thanks to the provision according to which the wheels of one or more pairs of wheels have rotation axles X1 and X2 that do not coincide with one another.

Another further embodiment of the vehicle 1 according to the present invention is schematically illustrated in figure 10.

In this case too, the vehicle 1 according to the present embodiment differs from that of the previous embodiments mainly for the number of pairs of wheels 6,7 present and for their operation modes.

All the other elements and components of the vehicle 1 are identical to those described in the previous embodiments, and shall not be described any further.

More in particular, according to the present embodiment there are totally four wheels 6, 7 that are arranged in two pairs, i.e. two first wheels 6 that are arranged along the first side 3 of the vehicle 1 and two second wheels 7 arranged along the second side 4.

Moreover, a first wheel is provided, that is to say on a first side of the vehicle, advanced or proximal to the first end 9a of the vehicle relatively to the respective second wheel on the other side of the vehicle, and a first wheel further back or proximal to the second end 9b of the vehicle relatively to the respective second wheel on the other side portion of the vehicle.

The first motor 14 is directly coupled with one of the first wheels 6.

The other of the first wheels 6 is on the other hand completely idle.

The second motor 15 is directly coupled with one of the second wheels 7, and in particular with the second wheel 7 that does not correspond - i.e. does not face - the first wheel 6 to which the first motor 14 is coupled.

The other second wheel 7 is indeed completely idle. Therefore, the first wheel 6 and the second wheel 7 to which the first motor 14 and the second motor 15 are coupled, are arranged at two angles that are diagonally opposite with respect to the frame 2 of the vehicle 1. Also in this case the motors 14, 15 are thus positioned at the two ends 9a, 9b of the vehicle 1, so as to balance the weights.

Also this embodiment of the vehicle 1 thus has a simplified structure and is more cost-effective with respect to the previous one, thanks to the even lower number of wheels 6, 7 and to the absence of transmission means.

The stability of the vehicle 1 when crossing discontinuities or interruptions along the tracks is also in this case completely ensured thanks to the already mentioned arrangement of the axles X1, X2 of the wheels.

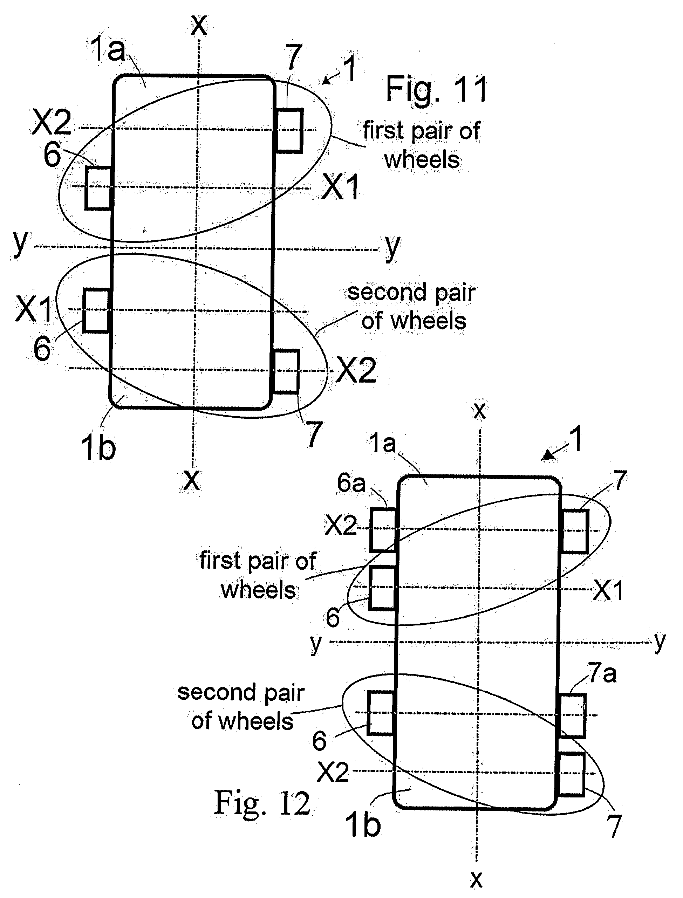

With reference now to figures 11 and 12, in order to best illustrate the distinctive characteristics of the invention subject-matter of the present patent application with respect to the teachings of the prior art, respective embodiments of vehicles according to the present invention are schematically illustrated. Firstly with reference to figure 11, a vehicle is illustrated provided with two pairs of wheels, a first and a second pair of wheels each of which comprises a first 6 and a second wheel 7 that are offset as above mentioned, although, it should be clear that, as also mentioned previously, they could comprise a single pair of wheels (the first or the second) with offset wheels, the other pair of wheels thus having, in such a case, wheels with a rotation axle that is substantially parallel and coinciding.

In such a figure, in addition to encircling the two pairs of wheels of the vehicle with a respective ideal ellipse, the longitudinal axis x-x of the vehicle has been indicated, as well as the central transversal axis or centreline y-y of the vehicle, which corresponds to the axis that is substantially perpendicular to the longitudinal development of the vehicle that ideally divides the vehicle 1 into two halves or parts, a front 1a and a rear 1b part, respectively.

Each pair of wheels thus comprises a first 6 and a second 7 wheel that are both longitudinally offset along the longitudinal axis x-x with respect to the other pairs of wheels, that is to say that both the wheels of each pair lie inside or at a transversal area or band of the vehicle that is longitudinally offset, along the axis x-x with respect to the other pairs, this meaning that each pair of wheels is at a predetermined distance from the central transversal axis y-y of the vehicle that is different with respect to the other pairs.

So, the two wheels 6 and 7 of the first pair or of the second pair are one closer or proximal to the axis y-y with respect to the other one. More in particular, with reference to the specific embodiment illustrated in fig. 11, the first wheel 6 of the first pair of wheels or better the respective rotation axle is closer or proximal to the axis y-y with respect to the second wheel 7, whereas the first wheel 6 of the second pair of wheels or better the respective rotation axle is closer or proximal to the axis y-y with respect to the second wheel 7.

With reference now to figure 12, a variant of the vehicle according to the present invention has been illustrated, provided with two pairs of wheels according to the present invention similar to the pairs of wheels of the vehicle of figure 11 and each encircled by a respective ideal ellipse. Such a vehicle also has other two auxiliary wheels 6a and 7a, each mounted for rotation externally with respect to a respective side 3 and 4 and having a rotation axle coinciding with a respective wheel 7 and 6 that is mounted for rotation externally with respect to the other side or opposed side of the vehicle 4 and 3.

Such a vehicle, basically, has two wheels more than the vehicle illustrated in figure 11, but in such a vehicle too, the wheels of one or of each pair, first and/or second pair, are offset with respect to one another and are offset with respect to the wheels of the other pairs of wheels. It will be indeed noted that the wheels 6 and 7 of the first pair of wheels are offset with respect to one another and are offset with respect to the wheels 6 and 7 of the second pair of wheels, as well as, of course with respect to the wheel 7a, whereas the wheels 6 and 7 of the second pair of wheels are offset with respect to one another and are offset with respect to the wheels 6 and 7 of the first pair of wheels as well as, of course, with respect to the wheel 6a.

The present invention has been described according to preferred embodiments, but equivalent variants can be conceived without departing from the scope of protection provided by the following claims.

## Claims

1. Satellite vehicle for automated warehouse, of the type provided with tracks for the vehicle displacement, comprising a frame (2), a support surface (5) for supporting a load provided above said frame (2), first wheels (6) and second wheels (7) supported by said frame (2) along a first side (3) and a second side (4), respectively, and suitable for rolling on the tracks of the automatic warehouse, and actuating means (8) for actuating said first wheels (6) and second wheels (7) for advancing the vehicle (1) along the tracks, **characterised in that** said first wheels (6) and second wheels (7) are arranged according to at least two pairs in which the first wheel (6) and the second wheel (7) of at least one of said pairs respectively have a first rotation axle (X1) and a second rotation axle (X2) not coinciding with one another and offset or not aligned with respect to the rotation axle of the wheels of all the other pairs of wheels of said vehicle.

2. Satellite vehicle according to claim 1, wherein said first axle (X1) and second axle (X2) are arranged parallel to one another on a plane parallel to the rolling plane of said first and second wheels (6, 7), and between them a set distance (D) is provided.

3. Satellite vehicle according to claim 2, wherein said set distance (D) is greater than 0 and lower than the diameter of said wheels (6, 7).

4. Vehicle according to any one of the previous claims, wherein the rotation axle (X1) of each of said first wheels (6) is offset or not aligned with respect to the rotation axle (X2) of each of said second wheels.

5. Satellite vehicle according to any one of the previous claims, wherein said actuating means (8) comprise a first motor (14) supported by said frame (2), coupled with at least one of said first wheels (6), and a second motor (15) supported by said frame (2), and coupled with at least one of said second wheels (7).

6. Satellite vehicle according to any one of the previous claims, wherein said first and second wheels (6,7) are four and are arranged in two pairs.

7. Satellite vehicle according to claim 5 or according to claim 6 when depending upon claim 5, wherein said first motor (14) is directly coupled with a first wheel (6), and in which said second motor (15) is directly coupled with a second wheel (7) not corresponding to the first wheel (6) to which said first motor (14) is coupled.

8. Satellite vehicle according to one of claims 1-5 or 7, wherein said first and second wheels (6, 7) are six and they are arranged in three pairs.

9. Satellite vehicle according to claims 5 and 8, wherein said first motor (14) is coupled with two adjacent first wheels (6), and wherein said second motor (15) is coupled with two second wheels (7) adjacent and not corresponding to the first wheels (6) to which said first motor (14) is coupled.

10. Satellite vehicle according to one of claims 1-5, wherein said first and second wheels (6,7) are eight and are arranged in four pairs.

11. Satellite vehicle according to claims 5 and 10, wherein said first motor (14) is coupled with all said first wheels (6), and wherein said second motor (15) is coupled with all said second wheels (7).

12. Satellite vehicle according to one of claims from 5-11 when depending upon claim 5, wherein said actuating means (8) comprise a first driving crown (16) directly coupled with said first motor (14) and with one of said first wheels (6), at least one first driven pinion (17) coupled with at least one of the remaining first wheels (6), and a first drive chain (19) wound on said first driving crown (16) and on said first driven pinion (17).

13. Satellite vehicle according to the preceding claim, wherein said actuating means (8) comprise a second driving crown (21) directly coupled with said second motor (15) and with one of said second wheels (7), at least one second driven pinion (22) coupled with at least one of the remaining second wheels (7), and a second drive chain (24) wound on said second driving crown (21) and on said second driven pinion (22).

14. Satellite vehicle according to any one of the previous claims, wherein said support surface (5) is associated with lifting means (26) to be brought from a lower inactive position to an upper transportation position for transporting a load.

15. Satellite vehicle according to the previous claim, wherein said lifting means (26) comprise a third motor (27), supported by said frame (2), coupled with a cam mechanism (28) in turn associated with said support surface (5).

16. Satellite vehicle according to one of claims 5-15 when depending upon claim 5, wherein said first motor (14) and/or said second motor (15) comprises an encoder (38) suitable for detecting the stopping of the vehicle (1) at a load or other obstacles present along the tracks.

17. Satellite vehicle according to one of the previous claims, comprising first sensor means (39) located at the two ends (9a, 9b) of said frame (2) and suitable for detecting the presence of a load at a set distance.

18. Satellite vehicle according to the previous claim, wherein said first sensor means (39) comprise, for each of the ends (9a, 9b) of said frame (2), a photocell suitable for emitting a respective beam in the forward direction movement of the vehicle and inclined with respect to the vertical.

19. Satellite vehicle according to one of the previous claims, comprising second sensor means (40) for detecting the end of a load deposited along the tracks of the warehouse.

20. Satellite vehicle according to the previous claim, wherein said second sensor means (40) comprise, for each of the ends (9a, 9b) of said frame (2), a sonar suitable for emitting upwards, in a substantially vertical direction, a respective signal.

21. Satellite vehicle according to one of the previous claims, comprising at least one bar code reading means (41), foreseen on one of said first and/or second sides (3,4) suitable for reading bar codes foreseen along the tracks, and suitable for resetting the vehicle every time it passes a position in which there is a bar code.

22. Vehicle according to any one of the previous claims, **characterised in that** said frame (2) comprises two opposed ends (9a, 9b) each projecting from one side (3) to the other (4), and **in that** it comprises at least one first wheel further forward or proximal to a first end (9a) of the vehicle relatively to the respective second wheel, and at least one first wheel further behind or proximal to the second end (9b) of the vehicle relatively to the respective second wheel.

23. Vehicle according to any one of the previous claims, **characterised in that** each pair of wheels comprises a first and a second wheel, both longitudinally offset with respect to the wheels of the other pairs of wheels along the longitudinal axis x-x of the vehicle, meaning that both the wheels of each pair lie inside or at a transversal area or band of the vehicle longitudinally offset with respect to the other pairs of wheels.

24. Vehicle according to any one of the previous claims, **characterised in that** it comprises at least one auxiliary wheel (6a, 7a) mounted for rotation externally with respect to a respective side (3, 4) and having a rotation axle coinciding with a wheel (7, 6) of said pair of offset wheels, said wheel (7, 6) of said pair of offset wheels being mounted for rotation externally with respect to a side (4, 3) of said vehicle that is opposed to said auxiliary wheel (6a, 7a).

25. Vehicle according to any one of claims 1 to 23, **characterised in that** said first wheels (6) and second wheels (7) are arranged according to at least two pairs in which the first wheel (6) and the second wheel (7) of at least one of said pairs respectively have a first rotation axle (X1) and a second rotation axle (X2) not coinciding with one another and offset with respect to or not aligned with the rotation axle of all the other wheels of said vehicle.

## Patentansprüche

1. Satellitenfahrzeug für automatisiertes Warenlager des Typs mit Schienen für die Fahrzeugverschiebung, umfassend einen Rahmen (2), eine Auflagefläche (5) zum Tragen einer vorgesehenen Last oberhalb des Rahmens (2), erste Räder (6) und zweite Räder (7), die von dem besagten Rahmen (2) getragen werden entlang einer jeweils ersten Seite (3) und zweiten Seite (4) und die für das Rollen auf den Schienen des automatischen Warenlagers geeignet sind, und Betätigungsmittel (8) zum Betätigen der besagten ersten Räder (6) und der zweiten Räder (7) zum Vorwärtsbewegen des Fahrzeuges (1) entlang der Schienen, **dadurch gekennzeichnet, dass** die besagten ersten Räder (6) und zweiten Räder (7) als mindestens zwei Paare angeordnet sind, in denen das erste Rad (6) und das zweite Rad (7) von mindestens einem der besagten Paare jeweils eine erste Drehachse (X1) und eine zweite Drehachse (X2) aufweist, die nicht miteinander übereinstimmen und die versetzt angeordnet oder nicht ausgerichtet sind in Bezug auf die Drehachse der Räder aller anderen Paare von Rädern des besagten Fahrzeugs.

2. Satellitenfahrzeug nach Anspruch 1, wobei die besagte erste Achse (X1) und die zweite Achse (X2) parallel zueinander angeordnet sind auf einer Ebene, die parallel zu der Rollebene der besagten ersten und zweiten Räder (6, 7) ist, und zwischen denen ein eingestellter Abstand (D) vorgesehen ist.

3. Satellitenfahrzeug nach Anspruch 2, wobei der besagte eingestellte Abstand (D) größer als 0 und kleiner als der Durchmesser der besagten Räder (6, 7) ist.

4. Fahrzeug nach irgendeinem der vorangegangenen Ansprüche, wobei die Drehachse (X1) eines jeden der besagten ersten Räder (6) versetzt angeordnet oder nicht ausgerichtet ist in Bezug auf die Drehachse (X2) eines jeden der besagten zweiten Räder.

5. Satellitenfahrzeug nach irgendeinem der vorangegangenen Ansprüche, wobei die besagten Betätigungsmittel (8) einen ersten Motor (14) umfassen, getragen von dem besagten Rahmen (2), verbunden mit mindestens einem der besagten ersten Räder (6), und einen zweiten Motor (15), getragen von dem besagten Rahmen (2) und verbunden mit mindestens einem der besagten zweiten Räder (7).

6. Satellitenfahrzeug nach irgendeinem der vorangegangenen Ansprüche, wobei die besagten ersten und zweiten Räder (6, 7) vier sind und in zwei Paaren angeordnet sind.

7. Satellitenfahrzeug nach Anspruch 5 oder nach Anspruch 6, wenn dieser von Anspruch 5 abhängt, wobei der besagte erste Motor (14) direkt verbunden ist mit einem ersten Rad (6), und in dem der besagte zweite Motor (15) direkt verbunden ist mit dem zweiten Rad (7), das nicht dem ersten Rad (6) entspricht, mit dem der besagte erste Motor (14) verbunden ist.

8. Satellitenfahrzeug nach einem der Ansprüche 1-5 oder 7, wobei die besagten ersten und zweiten Räder (6, 7) sechs sind und in drei Paaren angeordnet sind.

9. Satellitenfahrzeug nach den Ansprüchen 5 und 8, wobei der besagte erste Motor (14) verbunden ist mit zwei benachbarten ersten Rädern (6), und wobei der besagte zweite Motor (15) verbunden ist mit zwei zweiten Rädern (7), die benachbart sind und nicht den ersten Rädern (6) entsprechen, mit denen der besagte erste Motor (14) verbunden ist.

10. Satellitenfahrzeug nach einem der Ansprüche 1-5, wobei die besagten ersten und zweiten Räder (6, 7) acht sind und in vier Paaren angeordnet sind.

11. Satellitenfahrzeug nach den Ansprüchen 5 und 10, wobei der besagte erste Motor (14) verbunden ist mit allen besagten ersten Rädern (6), und wobei der besagte zweite Motor (15) verbunden ist mit allen besagten zweiten Rädern (7).

12. Satellitenfahrzeug nach einem der Ansprüche 5-11, wenn diese von Anspruch 5 abhängen, wobei die besagten Betätigungsmittel (8) eine erste Antriebskrone (16), direkt verbunden mit dem besagten ersten Motor (14) und mit einem der besagten ersten Räder (6), mindestens ein erstes angetriebenes Ritzel (17), verbunden mit mindestens einem der übrigen ersten Räder (6), und eine erste Antriebskette (19), gewunden um die besagte erste Antriebskrone (16) und um das besagte erste angetriebene Ritzel (17), umfassen.

13. Satellitenfahrzeug nach dem vorangegangenen Anspruch, wobei die besagten Betätigungsmittel (8) eine zweite Antriebskrone (21), direkt verbunden mit dem besagten zweiten Motor (15) und mit einem der besagten zweiten Räder (7), mindestens ein zweites angetriebenes Ritzel (22), verbunden mit mindestens einem der übrigen zweiten Räder (7), und eine zweite Antriebskette (24), gewunden um die besagte zweite Antriebskrone (21) und um das besagte zweite angetriebene Ritzel (22), umfassen.

14. Satellitenfahrzeug nach irgendeinem der vorangegangenen Ansprüche, wobei der besagten Auflagefläche (5) mit Hebemitteln (26) zugeordnet sind, um von einer unteren inaktiven Position in eine obere Transportposition zum Transportieren einer Last gebracht zu werden.

15. Satellitenfahrzeug nach dem vorangehenden Anspruch, wobei die besagten Hebemittel (26) einen dritten Motor (27), getragen von dem besagten Rahmen (2), umfassen, der mit einem Nockenmechanismus (28), wiederum der besagten Auflagefläche (5) zugeordnet, verbunden ist.

16. Satellitenfahrzeug nach einem der Ansprüche 5-15, wenn diese von Anspruch 5 abhängen, wobei der besagte erste Motor (14) und/oder der besagte zweite Motor (15) einen Codierer (38) umfasst, der zum Erfassen von Anhalten des Fahrzeugs (1) an einer Last oder anderen Hindernissen entlang der Schienen geeignet ist.

17. Satellitenfahrzeug nach einem der vorangegangenen Ansprüche, umfassend erste Sensormittel (39), die an den beiden Enden (9a, 9b) des besagten Rahmens (2) angeordnet sind und zum Erfassen des Vorhandenseins einer Last in einem eingestellten Abstand geeignet sind.

18. Satellitenfahrzeug nach dem vorangehenden Anspruch, wobei die besagten ersten Sensormittel (39) für jedes der Enden (9a, 9b) des besagten Rahmens (2) eine Fotozelle umfassen, die zum Aussenden einen entsprechenden Strahls in die vorwärts gerichtete Richtung des Fahrzeugs und gegenüber der Vertikalen geneigt geeignet ist.

19. Satellitenfahrzeug nach einem der vorangegangenen Ansprüche, umfassend zweite Sensormittel (40) zum Erfassen des Endes einer entlang der Schienen des Warenlagers abgesetzten Last.

20. Satellitenfahrzeug nach dem vorangehenden Anspruch, wobei die besagten zweiten Sensormittel (40) für jedes der Enden (9a, 9b) des besagten Rahmens (2) ein Sonar umfassen, das zum nach oben gerichteten Aussenden eines entsprechenden Signals in einer im Wesentlichen vertikalen Richtung geeignet ist.

21. Satellitenfahrzeug nach einem der vorangegangenen Ansprüche, umfassend mindestens ein Strichcode-Lesemittel (41), vorgesehen an einer der besagten ersten und/oder zweiten Seiten (3, 4) zum Lesen von Strichcodes, die entlang der Schienen vorgesehen sind, und zum Rückstellen des Fahrzeugs jedesmal dann, wenn es an einer Position vorbeiläuft, die einen Strichcode aufweist.

22. Fahrzeug nach irgendeinem der vorangegangenen Ansprüche, **dadurch gekennzeichnet, dass** der besagte Rahmen (2) zwei entgegengesetzte Enden (9a, 9b) aufweist, das sich jedes von einer Seite (3) zu der anderen (4) erstreckt, und dadurch, dass es mindestens ein erstes Rad weiter vorne oder nahe dem ersten Ende (9a) des Fahrzeugs im Verhältnis zu den entsprechenden zweiten Rad und mindestens ein erstes Rad weiter hinten oder nahe dem zweiten Ende (9b) des Fahrzeugs im Verhältnis zu dem entsprechenden zweiten Rad aufweist.

23. Fahrzeug nach irgendeinem der vorangegangenen Ansprüche, **dadurch gekennzeichnet, dass** jedes Paar von Rädern ein erstes und ein zweites Rad umfasst, beide in Längsrichtung versetzt angeordnet in Bezug auf die Räder der anderen Paare von Rädern entlang der Längsachse x-x des Fahrzeugs, was bedeutet, dass die beiden Räder eines jeden Paares innerhalb oder an einem transversalen Bereich oder Band des in Bezug auf die anderen Paare von Rändern in Längsrichtung versetzt angeordneten Fahrzeugs liegen.

24. Fahrzeug nach irgendeinem der vorangegangenen Ansprüche, **dadurch gekennzeichnet, dass** es mindestens ein Hilfsrad (6a, 7a) umfasst, das außen drehbar gelagert ist bezüglich einer jeweiligen Seite (3, 4) und eine Drehachse aufweist, die mit dem Rad (7, 6) des besagten Paares der versetzt angeordneten Räder übereinstimmt, das besagte Rad (7, 6) des besagten Paares der versetzt angeordneten Räder außen drehbar gelagert ist bezüglich einer Seite (4, 3) des besagten Fahrzeugs, die dem besagten Hilfsrad (6a, 7a) gegenüberliegt.

25. Fahrzeug nach einem der Ansprüche 1 bis 23, **dadurch gekennzeichnet, dass** die besagten ersten Räder (6) und die zweiten Räder (7) als mindestens zwei Paare angeordnet sind, in denen das erste Rad (6) und das zweite Rad (7) von mindestens einem der besagten Paare jeweils eine erste Drehachse (X1) und eine zweite Drehachse (X2) aufweist, die nicht miteinander übereinstimmen und die versetzt angeordnet oder nicht ausgerichtet sind in Bezug auf die Drehachse aller anderen Räder des besagten Fahrzeugs.

## Revendications

1. Véhicule satellite pour un dépôt automatisé, du type doté de rails pour le déplacement du véhicule, comprenant une armature (2), une surface de support (5) pour supporter une charge disposée au-dessus de ladite armature (2), des premières roues (6) et des deuxièmes roues (7) supportées par ladite armature (2) le long d'un premier côté (3) et un deuxième côté (4), respectivement, et adaptées pour rouler sur les rails du dépôt automatique, et des moyens d'actionnement (8) pour actionner lesdites premières roues (6) et lesdites deuxièmes roues (7) pour faire avancer le véhicule (1) le long des rails, **caractérisé en ce que** lesdites premières roues (6) et lesdites deuxièmes roues (7) sont disposées en au moins deux paires dans lesquelles la première roue (6) et la deuxième roue (7) d'au moins une desdites paires ont respectivement un premier axe de rotation (X1) et un deuxième axe de rotation (X2) ne coïncidant pas l'un avec l'autre et décalés ou pas alignés par rapport à l'axe de rotation des roues de toutes les autres paires de roues dudit véhicule.

2. Véhicule satellite selon la revendication 1, dans lequel ledit premier axe (X1) et ledit deuxième axe (X2) sont disposés parallèlement l'un à l'autre sur un plan parallèle au plan de roulement desdites première et deuxième roues (6, 7), et entre elles une distance déterminée (D) est prévue.

3. Véhicule satellite selon la revendication 2, dans lequel ladite distance déterminée (D) est supérieure à 0 et inférieure au diamètre desdites roues (6, 7).

4. Véhicule selon l'une quelconque des revendications précédentes, dans lequel l'axe de rotation (X1) de chacune desdites premières roues (6) est décalé ou pas aligné par rapport à l'axe de rotation (X2) de chacune desdites deuxièmes roues.

5. Véhicule satellite selon l'une quelconque des revendications précédentes, dans lequel lesdits moyens d'actionnement (8) comprennent un premier moteur (14) supporté par ladite armature (2), couplé au moins à l'une desdites premières roues (6), et un deuxième moteur (15) supporté par ladite armature (2), et couplé au moins à l'une desdites deuxièmes roues (7).

6. Véhicule satellite selon l'une quelconque des revendications précédentes, dans lequel lesdites premières et deuxièmes roues (6, 7) sont au nombre de quatre et sont disposées en deux paires.

7. Véhicule satellite selon la revendication 5 ou selon la revendication 6 quand elle dépend de la revendication 5, dans lequel ledit premier moteur (14) est couplé directement à une première roue (6), et dans lequel ledit deuxième moteur (15) est directement couplé à une deuxième roue (7) ne correspondant pas à la première roue (6) à laquelle ledit premier moteur (14) est couplé.

8. Véhicule satellite selon l'une des revendications 1 à 5 ou 7, dans lequel lesdites premières et deuxièmes roues (6, 7) sont au nombre de six et elles sont disposées en trois paires.

9. Véhicule satellite selon les revendications 5 et 8, dans lequel ledit premier moteur (14) est couplé à deux premières roues (6) adjacentes, et dans lequel ledit deuxième moteur (15) est couplé à deux deuxièmes roues (7) adjacentes et ne correspondant pas aux premières roues (6) auxquelles ledit premier moteur (14) est couplé.

10. Véhicule satellite selon l'une des revendications 1 à 5, dans lequel lesdites premières et deuxièmes roues (6, 7) sont au nombre de huit et sont disposées en quatre paires.

11. Véhicule satellite selon les revendications 5 et 10, dans lequel ledit premier moteur (14) est couplé à toutes lesdites premières roues (6), et dans lequel ledit deuxième moteur (15) est couplé à toutes lesdites deuxièmes roues (7).

12. Véhicule satellite selon l'une des revendications 5 à 11 quand elles dépendent de la revendication 5, dans lequel lesdits moyens d'actionnement (8) comprennent une première couronne d'entraînement (16) directement couplée audit premier moteur (14) et à l'une desdites premières roues (6), au moins un premier pignon mené (17) couplé au moins à l'une des premières roues (6) restantes, et une première chaîne d'entraînement (19) enroulée sur ladite première couronne d'entraînement (16) et sur ledit premier pignon mené (17).

13. Véhicule satellite selon la revendication précédente, dans lequel lesdits moyens d'actionnement (8) comprennent une deuxième couronne d'entraînement (21) directement couplée audit deuxième moteur (15) et avec l'une desdites deuxièmes roues (7), au moins un deuxième pignon mené (22) couplé à au moins une des deuxièmes roues (7) restantes, et une deuxième chaîne d'entraînement (24) enroulée sur ladite deuxième couronne d'entraînement (21) et sur ledit deuxième pignon mené (22).

14. Véhicule satellite selon l'une quelconque des revendications précédentes, dans lequel ladite surface de support (5) est associée à des moyens de levage (26) qui doivent être amenés d'une position inactive inférieure à une position de transport supérieure pour transporter une charge.

15. Véhicule satellite selon la revendication précédente, dans lequel lesdits moyens de levage (26) comprennent un troisième moteur (27), supporté par ladite armature (2), couplé à un mécanisme de came (28) associé à son tour à ladite surface de support (5).

16. Véhicule satellite selon l'une des revendications 5 à 15 quand elles dépendent de la revendication 5, dans lequel ledit premier moteur (14) et/ou ledit deuxième moteur (15) comprend un encodeur (38) adapté pour détecter l'arrêt du véhicule (1) quand une charge ou d'autres obstacles sont présents le long des rails.

17. Véhicule satellite selon l'une des revendications précédentes, comprenant des premiers moyens de capteur (39) situés aux deux extrémités (9a, 9b) de ladite armature (2) et adaptés pour détecter la présence d'une charge à une distance déterminée.

18. Véhicule satellite selon la revendication précédente, dans lequel lesdits premiers moyens de capteur (39) comprennent, pour chacune des extrémités (9a, 9b) de ladite armature (2), une cellule photoélectrique adaptée pour émettre un faisceau respectif dans le mouvement dirigé vers l'avant du véhicule et incliné par rapport à la verticale.

19. Véhicule satellite selon l'une des revendications précédentes, comprenant des deuxièmes moyens de capteur (40) pour détecter l'extrémité d'une charge déposée le long des rails du dépôt.

20. Véhicule satellite selon la revendication précédente, dans lequel lesdits deuxièmes moyens de capteur (40) comprennent, pour chacune des extrémités (9a, 9b) de ladite armature (2), un sonar adapté pour émettre vers le haut, dans une direction sensiblement verticale, un signal respectif.

21. Véhicule satellite selon l'une des revendications précédentes, comprenant au moins un moyen de lecture de code-barres (41), prévu sur l'un desdits premier et/ou deuxième côtés (3, 4) adapté pour lire les codes-barres placés le long des rails, et adapté pour réinitialiser le véhicule chaque fois qu'il dépasse une position à laquelle se trouve un code-barres.

22. Véhicule selon l'une quelconque des revendications précédentes, **caractérisé en ce que** ladite armature (2) comprend deux extrémités opposées (9a, 9b) chacune en saillie d'un côté (3) à l'autre (4), et **en ce qu'**elle comprend au moins une première roue plus loin vers l'avant ou proche d'une première extrémité (9a) du véhicule relativement à la deuxième roue respective, et au moins une première roue plus loin vers l'arrière ou proche de la deuxième extrémité (9b) du véhicule relativement à la deuxième roue respective.

23. Véhicule selon l'une quelconque des revendications précédentes, **caractérisé en ce que** chaque paire de roues comprend une première et une deuxième roue, les deux étant décalées longitudinalement par rapport aux roues des autres paires de roues le long de l'axe longitudinal x-x du véhicule, c'est-à-dire que les roues de chaque paire se trouvent à l'intérieur ou dans une zone ou bande transversale du véhicule décalée longitudinalement par rapport aux autres paires de roues.

24. Véhicule selon l'une quelconque des revendications précédentes, **caractérisé en ce qu'**il comprend au moins une roue auxiliaire (6a, 7a) montée pour tourner extérieurement par rapport à un côté respectif (3, 4) et ayant un axe de rotation qui coïncide avec une roue (7, 6) de ladite paire de roues décalées, ladite roue (7, 6) de ladite paire de roues décalées étant montée pour tourner extérieurement par rapport à un côté (4, 3) dudit véhicule opposé à ladite roue auxiliaire (6a, 7a).

25. Véhicule selon l'une quelconque des revendications 1 à 23, **caractérisé en ce que** lesdites premières roues (6) et deuxièmes roues (7) sont disposées selon au moins deux paires, dans lesquelles la première roue (6) et la deuxième roue (7) d'au moins l'une desdites paires ont respectivement un premier axe de rotation (X1) et un deuxième axe de rotation (X2) qui ne coïncident pas l'un avec l'autre et décalés par rapport ou pas alignés avec l'axe de rotation de toutes les autres roues dudit véhicule.
